# EUROPEAN PATENT SPECIFICATION

(11) **EP 3 297 079 B1**
(45) Date of publication and mention of the grant of the patent: **15.01.2020**
(21) Application number: 16792331.7
(22) Date of filing: 16.03.2016
(51) Int. Cl.: H01M 8/0612, H01M 8/04014, H01M 8/2425

(54) **FUEL CELL SYSTEM**
BRENNSTOFFZELLENSYSTEM
SYSTÈME DE PILE À COMBUSTIBLE

(30) Priority: 11.05.2015 JP 2015096796
(43) Date of publication of application: 21.03.2018
(73) Proprietor: Panasonic Corporation, Osaka 571-8501 (JP)
(72) Inventor: KAKUWA, Takashi, Osaka 540-6207 (JP); FUJITA, Tatsuo, Osaka 540-6207 (JP); OOE, Toshiharu, Fukuoka 802-8601 (JP); SAKAMOTO, Taiichiro, Fukuoka 802-8601 (JP); OTSUKA, Toshiharu, Fukuoka 802-8601 (JP); WATANABE, Naoki, Fukuoka 802-8601 (JP)
(74) Representative: Grünecker Patent- und Rechtsanwälte PartG mbB
(86) International application number: PCT/JP2016/001519
(87) International publication number: WO 2016/181596

(56) References cited:
- EP-A1- 3 208 878
- JP-A- 2002 053 302
- JP-A- 2004 156 895
- JP-A- 2010 032 184
- JP-A- 2010 232 042
- JP-A- 2015 011 810
- JP-A- 2015 011 810
- JP-A- 2015 185 493
- JP-A- 2015 187 952
- US-A1- 2009 029 204
- US-A1- 2015 064 592

## Description

### Technical Field

The present disclosure relates to a fuel cell system.

### Background Art

In conventional fuel cell systems, fuel is used for electric power generation of a fuel cell and is also used as combustion fuel in a combustor. For example, in many cases, the percentage of the fuel used for the electric power generation of the fuel cell is set to 70 to 80% of the entire amount of fuel (hereinafter, this percentage is referred to as a "fuel utilization ratio"), and the remaining 20 to 30% of fuel is used as the combustion fuel in the combustor.

In recent years, due to an increase in an electric power demand, an increase in interest in environmental problems, and the like, further improvement of electric power generation efficiency of fuel cells has been required. Examples of a method of improving the electric power generation efficiency of the fuel cell include a method of increasing a generated voltage of the fuel cell and a method of increasing the fuel utilization ratio of the fuel cell. The former method requires materials development of fuel cells. Therefore, the latter method is regarded as a promising method.

However, when further increasing the fuel utilization ratio of the fuel cell, a larger amount of reformed gas is used for electric power generation in the fuel cell. Therefore, as the amount of reformed gas used for the electric power generation in the fuel cell increases, the amount of combustible gas used as the combustion fuel in the combustor decreases. On this account, in a case where cathode off gas having flowed through the fuel cell is used as an oxidizing agent when combusting unconsumed reformed gas in the combustor, a deterioration of combustibility (i.e., misfire) due to a decrease in concentration of the combustible gas may be caused. There is a possibility that due to the deterioration of the combustibility, uncombusted components (CO, etc.) may remain in combustion exhaust gas. Therefore, burden on an exhaust gas treatment catalyst (purification catalyst) used for, for example, removing the uncombusted components increases.

It should be noted that when the amount of heat generated by the combustor decreases by the decrease in the amount of combustible gas, it becomes difficult to obtain an adequate amount of heat for maintaining an appropriate temperature of a reformer for a reforming reaction and a temperature of the fuel cell which affects the generated voltage. Therefore, for example, it is necessary to improve heat insulation performance of an accommodating portion accommodating a fuel cell stack and heat recovery performance of, for example, a heat exchanger recovering combustion heat of the combustor. As a result, there are possibilities that: manufacturing cost for a fuel cell system increases; a system configuration becomes complex; and the system increases in size.

In the fuel cell systems, since the fuel utilization ratio of the fuel cell is an important parameter for determining the electric power generation efficiency, the fuel utilization ratio is determined based on an electric power generation state. On the other hand, to optimally control the temperature and temperature irregularity of the fuel cell which affect the generated voltage, an air utilization ratio of the fuel cell may change depending on an operation state, an ambient temperature, and the like. For example, when the fuel cell system is operated under conditions that the fuel utilization ratio and air utilization ratio of the fuel cell are 70% and 35%, respectively, lean combustion occurs at the combustor. Therefore, in this case, a possibility that the combustibility of the combustor deteriorates (for example, misfire occurs) increases.

PTL 1 proposes a method of suppressing the deterioration of the combustibility of the combustor in such a manner that: fresh air different from the cathode off gas from the fuel cell is set to have an optimum air ratio; and the air is supplied to the combustor.

As shown in Fig. 5, PTL 2 proposes a method of suppressing the deterioration of the combustibility of a combustor 34 in such a manner that: a porous body 21 having gas permeability and electrical insulation property is provided at a combustor of a fuel cell system so as to cover fuel ejecting portions 18 and air ejecting portions 19.

As shown in Fig. 6, PTL 3 proposes a method of suppressing the deterioration of the combustibility of the combustor in such a manner that a covering body 17 closes a lateral side of air flowing portions 8 of cells 9.

PTL 4 proposes a method of suppressing the deterioration of the combustibility of the combustor in such a manner that to promote mixing between air and unconsumed reformed gas from fuel cells, an elongated member (vortex flow generating body) is provided so as to cover the plurality of fuel cells.

US 2009/0029204 A1 relates to a fuel cell system including a fuel cell stack, a fuel inlet conduit, and a fuel heat exchanger containing a fuel reformation catalyst. The fuel heat exchanger is connected to the fuel inlet conduit and to a fuel cell system exhaust conduit.

JP2015-011810 discloses a fuel cell system with a reformer, an exhaust fuel collecting portion and a combustor.

### Citation List

### Patent Literature

PTL 1: Japanese Laid-Open Patent Publication No. 2013-157274
PTL 2: Japanese Laid-Open Patent Publication No. 2013-206603
PTL 3: Japanese Laid-Open Patent Publication No. 2013-222592
PTL 4: Japanese Laid-Open Patent Publication No. 2011-150842

### Summary of Invention

### Technical Problem

However, conventional examples do not sufficiently consider appropriate mixing in a combustor between air and reformed gas discharged from a solid-oxide fuel cell. Further, the conventional examples do not sufficiently consider appropriate heating of a reformer using heat of the combustor.

One aspect of the present disclosure was made under these circumstances and provides a fuel cell system capable of, when increasing a fuel utilization ratio for improving electric power generation efficiency of a solid-oxide fuel cell, more appropriately perform mixing in a combustor between air and reformed gas discharged from a solid-oxide fuel cell than conventional cases. Further, the aspect of the present disclosure provides a fuel cell system capable of more appropriately perform heating of a reformer using heat of a combustor than conventional cases.

### Solution to Problem

To solve the above problems, a fuel cell system according to one aspect of the present invention is defined in independent claim 1. Further advantageous embodiments are defined in the dependent claims.

### Advantageous Effects of Invention

The fuel cell system according to one aspect of the present disclosure is configured as explained above, and when increasing the fuel utilization ratio for improving the electric power generation efficiency of the solid-oxide fuel cell, the mixing at the combustor between the air and the reformed gas discharged from the solid-oxide fuel cell can be performed more appropriately than conventional cases. In addition, heating of the reformer by heat of the combustor can be performed more appropriately than conventional cases.

### Brief Description of Drawings

Fig. 1 is a schematic diagram showing one example of the configuration of a fuel cell system according to an embodiment.
Fig. 2 is a perspective view showing one example of a peripheral portion of a fuel collecting portion of the fuel cell system according to the embodiment.
Fig. 3 is a diagram showing one example of a result of a fluid simulation at the peripheral portion of the fuel collecting portion of the fuel cell system according to the embodiment.
Figs. 4A and 4B are diagrams showing one example of the peripheral portion of the fuel collecting portion of the fuel cell system according to a modified example of the embodiment.

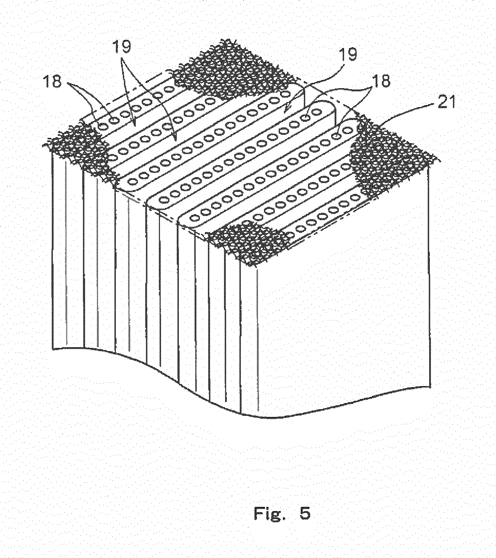

Fig. 5 is a schematic diagram showing one example of the configuration of a conventional fuel cell system.

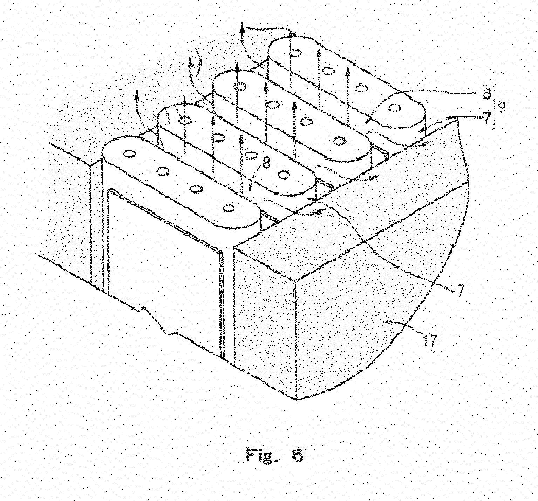

Fig. 6 is a schematic diagram showing one example of the configuration of a conventional fuel cell system.

### Description of Embodiments

The present inventors have diligently studied problems of conventional examples regarding appropriate mixing in a combustor between air and reformed gas discharged from a solid-oxide fuel cell and obtained the following findings.

First, according to the fuel cell system of PTL 1, since a passage for the fresh air needs to be newly formed, an increase in cost for the fuel cell system and an accommodation property of the fuel cell system are problems.

According to the fuel cell system of PTL 2, there are problems that: the porous body 21 needs to be added; and PTL 2 is not applicable to configurations other than a configuration in which the porous body 21 can be fixed.

According to the fuel cell system of PTL 3, there is a problem that it is difficult to apply PTL 3 to a configuration in which the covering body 17 cannot be arranged at the lateral side of the air flowing portions 8.

According to the fuel cell system of PTL 4, there are problems that: it is difficult to apply PTL 4 to a configuration in which the vortex flow generating body cannot be arranged; and it may be difficult to secure heat resistance of the vortex flow generating body.

A fuel cell system according to a first aspect of the present disclosure is defined in claim 1 and includes: a reformer configured to reform raw fuel to generate reformed gas; a solid-oxide fuel cell configured to generate electric power by a reaction between the reformed gas and air; a fuel collecting portion provided adjacent to the solid-oxide fuel cell, the reformed gas remaining after the reaction of the solid-oxide fuel cell being collected at the fuel collecting portion; an air flow-through portion formed along an outer periphery of the fuel collecting portion; a combustor configured to mix the reformed gas discharged from a fuel jetting opening of the fuel collecting portion with the air flowing through the air flow-through portion, to combust the reformed gas; and a covering body provided so as to block flow of the air in a direction from the air flow-through portion toward the combustor along the reformer, wherein: the reformer reforms the raw fuel using combustion heat of the combustor; and the covering body supplies the air toward the fuel jetting opening of the fuel collecting portion.

According to the above configuration, when increasing the fuel utilization ratio for improving the electric power generation efficiency of the solid-oxide fuel cell, the mixing at the combustor between the air and the reformed gas discharged from the solid-oxide fuel cell can be performed more appropriately than conventional cases. In addition, heating of the reformer by heat of the combustor can be performed more appropriately than conventional case.

Specifically, when the air from the solid-oxide fuel cell flows through the air flow-through portion, the air is guided by the covering body to the fuel jetting opening of the fuel collecting portion. Then, the reformed gas from the fuel jetting opening and the air are mixed with each other to be combusted in the combustor. This can prevent a case where the air just flows through between the reformer and the fuel collecting portion without contributing to the fuel combustion of the combustor. Further, since the reformer is located adjacent to the fuel collecting portion through the air flow-through portion, the combustion heat of the combustor can be appropriately transferred to the reformer.

As above, for example, even when increasing the fuel utilization ratio for improving the electric power generation efficiency of the solid-oxide fuel cell, the fuel combustion at the combustor can be stably performed without causing, for example, the misfire at the combustor. To be specific, a decrease in the amount of heat generated by the combustor and a deterioration of combustibility can be suppressed. Therefore, uncombusted gas components (CO, etc.) in the combustion exhaust gas can be reduced. Further, the reformer located adjacent to the fuel collecting portion can be appropriately heated by efficiently utilizing the combustion heat of the combustor. Further, an increase in manufacturing cost for the fuel cell system can be suppressed, and a compact configuration of the combustor can be maintained.

A fuel cell system according to a second aspect of the present disclosure may be configured such that in the fuel cell system according to the first aspect, the air used for combustion of the combustor is cathode off gas discharged from the solid-oxide fuel cell.

According to the above configuration, it is unnecessary to additionally provide a device for supplying air to the combustor, so that the configuration of the fuel cell system can be simplified. Further, the manufacturing cost for the fuel cell system can be reduced.

A fuel cell system according to a third aspect of the present disclosure may be configured such that in the fuel cell system according to the first or second aspect, the covering body is inclined vertically downward in a direction from the reformer toward the fuel collecting portion.

According to the above configuration, a space between the covering body and an upper wall portion of the fuel collecting portion can be appropriately secured, so that the supply of the air toward the fuel jetting opening of the fuel collecting portion is facilitated. Further, the covering body is arranged so as to enclose the flame of the combustor. Therefore, the effect of holding the flame of the combustor by the covering body can be obtained, and this can reduce a possibility that the misfire of the combustor occurs.

A fuel cell system according to a fourth aspect of the present disclosure may be configured such that the fuel cell system according to any one of the first, second, and third aspects further includes a first flame holding cover covering the combustor from above the covering body.

A fuel cell system according to a fifth aspect of the present disclosure may be configured such that in the fuel cell system according to the fourth aspect, the first flame holding cover is inclined vertically upward in a direction from the reformer toward the fuel collecting portion.

According to the above configuration, the first flame holding cover is arranged so as to enclose the flame of the combustor. Therefore, the effect of holding the flame of the combustor by the first flame holding cover can be obtained, and this can reduce a possibility that the misfire of the combustor occurs.

A fuel cell system according to a sixth aspect of the present disclosure may be configured such that the fuel cell system according to any one of the first, second, third, fourth, and fifth aspects further includes a second flame holding cover covering the combustor from above the covering body and projecting from the fuel collecting portion.

According to the above configuration, the second flame holding cover is arranged so as to enclose the flame of the combustor. Therefore, the effect of holding the flame of the combustor by the second flame holding cover can be obtained, and this can reduce a possibility that the misfire of the combustor occurs.

A fuel cell system according to a seventh aspect of the present disclosure may be configured such that in the fuel cell system according to any one of the first, second, third, fourth, fifth, and sixth aspects, the covering body includes an opening portion through which the air is jetted from the air flow-through portion toward the combustor, and the opening portion is provided right under the fuel jetting opening.

According to the above configuration, the air hardly flows through between the flame and flame of the adjacent fuel jetting openings, so that the flame is easily transferred from an ignition point of the combustor to the entire circumference.

Hereinafter, an embodiment of the present disclosure will be explained in reference to the drawings. It should be noted that the embodiment explained below is just one specific example of the present disclosure. Numerical values, shapes, materials, components, positions and connection states of the components, and the like stated in the following embodiment are just examples and do not limit the present disclosure. Among components in the following embodiment, components that are not recited in an independent claim showing a most generic concept of the present disclosure will be explained as optional components. Explanations of components with the same reference sign in the drawings may not be repeated. For ease of understanding, the components in the drawings are schematically shown, and shapes, size ratios, and the like may not be shown accurately.

### Embodiment

### Entire Configuration of Device

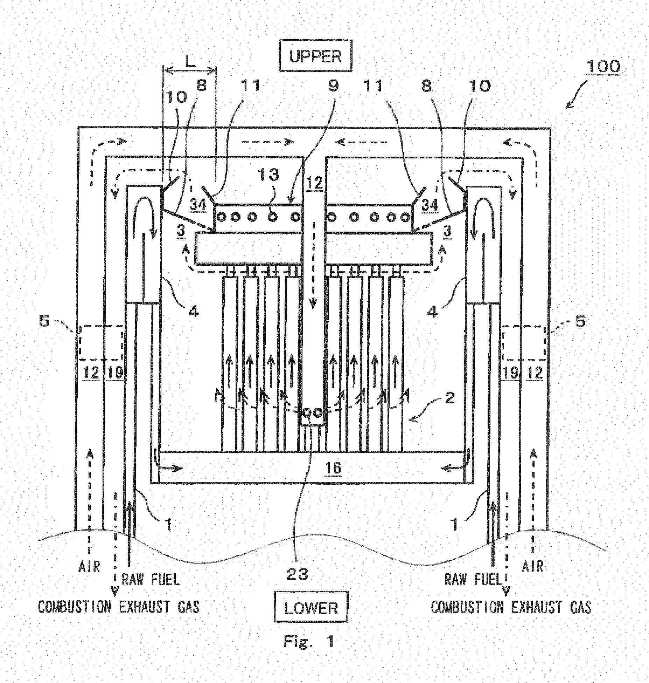

Fig. 1 is a schematic diagram showing one example of the configuration of a fuel cell system according to the embodiment. Fig. 1 shows a fuel cell system 100 in a side view. For convenience sake, gravity acts from "upper" to "lower," and in the following explanation, an upper/lower direction may be referred to as a vertical direction. Flow of raw fuel and reformed gas is shown by solid lines. Flow of air is shown by dotted lines. Flow of combustion exhaust gas is shown by one-dot chain lines.

As shown in Fig. 1, the fuel cell system 100 includes a reformer 4, solid-oxide fuel cells 2, a fuel collecting portion 9, a raw fuel passage 1, a reformed gas passage 16, an air passage 12, and an exhaust gas passage 19.

The reformer 4 reforms raw fuel to generate reformed gas. Specifically, the reformer 4 performs a reforming reaction of the raw fuel supplied through the raw fuel passage 1, to generate hydrogen-containing reformed gas. The reforming reaction may be any type, and examples thereof include a steam-reforming reaction, an autothermal reaction, and a partial oxidation reaction.

Although not shown in the drawings, devices necessary for the respective reforming reactions are suitably provided. For example, when the reforming reaction is the steam-reforming reaction, the fuel cell system 100 is provided with an evaporator configured to generate steam and a water supplier configured to supply water to the evaporator. When the reforming reaction is the autothermal reaction, the fuel cell system 100 is further provided with an air supplier configured to supply air to the reformer. In the present embodiment, an evaporating portion (not shown) is provided upstream of the raw fuel passage 1. With this, water for the reforming reaction evaporates by utilizing remaining heat of the combustion exhaust gas flowing through the exhaust gas passage 19, and the raw fuel and the steam are mixed with each other through the raw fuel passage 1 to be supplied to the reformer 4,

The raw fuel is fuel containing an organic compound constituted by at least carbon and hydrogen. Examples of the raw fuel include: city gas and natural gas, each of which contains methane as a major component; and LPG.

In a plan view in the vertical direction, the reformer 4 is formed in a ring shape (for example, an annular shape) surrounding the fuel collecting portion 9. Each of an air flow-through portion 3 and a combustor 34 is formed along an outer periphery of the fuel collecting portion 9. As shown in Fig. 1, in the present embodiment, the air flow-through portion 3 and the combustor 34 each having the ring shape (for example, the annular shape) are formed between the reformer 4 and the fuel collecting portion 9. Details of a peripheral portion of the fuel collecting portion 9 will be described later.

Thus, the reformer 4 is heated by heat of the combustor 34 and heat of the combustion exhaust gas to a temperature (for example, about 600 to 700°C) suitable for the reforming reaction.

The solid-oxide fuel cell 2 generates electric power by a reaction between the reformed gas and the air. It should be noted that a fuel cell stack may be, for example, a flat-plate stack formed by stacking members such as a plurality of flat-plate fuel cells and interconnectors or a cylindrical stack formed by bundling (bundling and fixing) members such as a plurality of cylindrical fuel cells (cell tubes) and interconnectors.

After the reformed gas discharged from the reformer 4 is sufficiently mixed in the reformed gas passage 16 having a hollow plate shape, the reformed gas is evenly distributed and supplied to internal hollow regions of the solid-oxide fuel cells 2. With this, the reformed gas discharged from the reformed gas passage 16 flows upward in the hollow regions of the solid-oxide fuel cells 2. Thus, the hydrogen (reformed gas) necessary for the electric power generating reaction of the solid-oxide fuel cells 2 is supplied to the solid-oxide fuel cells 2.

On the other hand, oxygen (air) necessary for the electric power generating reaction of the solid-oxide fuel cells 2 is supplied through a different route to the fuel cell stack. Specifically, an air supplier (not shown) is provided upstream of the air passage 12. One example of the air supplier is a blower. The air forcibly transferred in the air passage 12 by the air supplier flows through a suitable filter (not shown) and then supplied to a downstream portion of the air passage 12. At this time, the air flowing through the air passage 12 is heated by heat exchange with the combustion exhaust gas flowing through the exhaust gas passage 19. To be specific, a heat exchanger 5 includes a channel member constituting the exhaust gas passage 19 and a channel member constituting the air passage 12. With this, the air of normal temperature is heated to about 600°C. The combustion exhaust gas having a high temperature is cooled to about 300°C. The combustion exhaust gas is then supplied to a heat exchanger (not shown) for generating hot water for hot water supply. As shown in Fig. 1, the downstream portion of the air passage 12 is located in the vicinity of a middle lower end portion of the fuel cell stack, and a plurality of air outlets 23 are formed at the downstream portion so as to be located substantially uniformly in a circumferential direction of the channel member constituting the air passage 12. With this, the high-temperature air (for example, about 600 to 700°C) discharged from the air outlets 23 flows upward through gaps each formed between the adjacent solid-oxide fuel cells 2. Thus, the oxygen (air) necessary for the electric power generating reaction of the solid-oxide fuel cells 2 is supplied to the solid-oxide fuel cells 2.

As above, while the reformed gas and the air are flowing upward in the fuel cell stack, the electric power generating reaction occurs among the hydrogen and carbon monoxide in the reformed gas and the oxygen in the air. Thus, steam and carbon dioxide gas are generated, and at the same time, electromotive force is generated. About 60 to 80% of electric power generating components (hydrogen and carbon monoxide) in the reformed gas are used in the electric power generating reaction, and about 20 to 40% of the unconsumed electric power generating components are combusted above the fuel cell stack. Then, combustion heat of the unconsumed reformed gas is utilized in the reforming reaction of the reformer 4. Typically, about 30% of the oxygen in the air is used in the electric power generating reaction, and the air containing the unconsumed oxygen is also combusted above the fuel cell stack.

According to conventional configurations, the unconsumed reformed gas is jetted through fuel jetting portions of upper end portions of several tens to several hundreds of solid-oxide fuel cells to be combusted. Therefore, incomplete combustion may occur at the fuel jetting portions of several solid-oxide fuel cells by, for example, partial misfire of the combustor.

In the present embodiment, as shown in Fig. 1, the unconsumed reformed gas of the solid-oxide fuel cells 2 is collected at the fuel collecting portion 9. To be specific, the fuel collecting portion 9 is provided adjacent to the solid-oxide fuel cells 2, and the reformed gas remaining after the reaction of the solid-oxide fuel cells 2 is collected at the fuel collecting portion 9. The combustor 34 mixes the reformed gas discharged from fuel jetting openings 13 of the fuel collecting portion 9 with the air flowing through the air flow-through portion 3 to combust the reformed gas. Hereinafter, the configuration of the peripheral portion of the fuel collecting portion 9 will be explained. It should be noted that the air used for the combustion of the combustor 34 may be air supplied by an air supplier (not shown) or cathode off gas discharged from the solid-oxide fuel cells 2. In the present embodiment, the air used for the combustion of the combustor 34 is the cathode off gas discharged from the solid-oxide fuel cells 2. With this, it is unnecessary to additionally provide a device for supplying the air to the combustor 34, so that the configuration of the fuel cell system 100 can be simplified. Further, the manufacturing cost for the fuel cell system 100 can be reduced.

### Configuration of Peripheral Portion of Fuel Collecting Portion

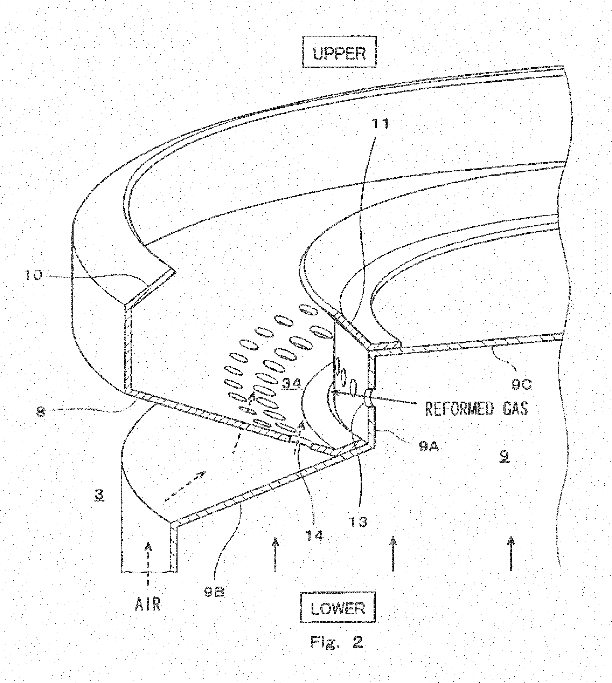

Fig. 2 is a perspective view showing one example of the peripheral portion of the fuel collecting portion of the fuel cell system according to the embodiment. In Fig. 2, gravity acts from "upper" to "lower." Further, the flow of the reformed gas is shown by solid lines, and the flow of the air is shown by dotted lines.

As shown in Figs. 1 and 2, the fuel collecting portion 9 having a hollow plate shape (herein, a disc shape) is provided above the fuel cell stack including the solid-oxide fuel cells 2. Insides of the solid-oxide fuel cells 2 and an inside of the fuel collecting portion 9 communicate with each other such that the unconsumed reformed gas is collected at the fuel collecting portion 9 as described above.

As shown in Fig. 2, the fuel collecting portion 9 includes: a cylindrical side wall portion 9A standing in the vertical direction; a disc-shaped lid portion 9C horizontally extending from an upper end portion of the side wall portion 9A toward a middle portion of the side wall portion 9A; and an annular upper wall portion 9B extending outward from a lower end portion of the side wall portion 9A.

Several tens of the fuel jetting openings 13 (for example, round holes that are opening portions through which the reformed gas is jetted) are formed at appropriate vertical-direction positions of the side wall portion 9A of the fuel collecting portion 9 so as to be arranged substantially uniformly in the circumferential direction. With this, the reformed gas in the fuel collecting portion 9 is redistributed and jetted through the fuel jetting openings 13 to the combustor 34 in a horizontal direction. Therefore, the partial misfire in the conventional configurations is suppressed.

A covering body 8 is provided so as to block the flow of the air in a direction from the air flow-through portion 3 toward the combustor 34 along the reformer 4 (i.e., the vertical direction) and is configured so as to supply the air toward the fuel jetting openings 13 of the fuel collecting portion 9.

The covering body 8 is constituted by, for example, a metal plate having an annular shape and made of stainless steel, and an inner end portion of the metal plate is fixed to an end portion of the upper wall portion 9B by a suitable fixing method such as welding. Several tens of air jetting openings 14 (for example, round holes that are opening portions through which the air is jetted) are formed at appropriate positions of the covering body 8 in the vicinity of the upper wall portion 9B so as to form a plurality of stages (herein, two stages) and be arranged substantially uniformly in the circumferential direction. This can prevent a case where the air just flows through between the reformer 4 and the fuel collecting portion 9 without contributing to the fuel combustion of the combustor 34. To be specific, the covering body 8 is configured such that: the air can be jetted through the air jetting openings 14 toward the fuel jetting openings 13 at a desired flow velocity; and the air flowing through the air flow-through portion 3 can be prevented from just flowing through between the reformer 4 and the fuel collecting portion 9. Therefore, the substantially entire amount of air may be used in the fuel combustion of the combustor 34.

It should be noted that even if the covering body 8 is not used, the air can appropriately contribute to the fuel combustion of the combustor 34 by shortening a distance between the fuel collecting portion 9 and the reformer 4. However, according to this method, there is a possibility that since a distance between the flame of the combustor 34 and the reformer 4 (i.e., the reforming catalyst) becomes too short, the reforming catalyst deteriorates by an influence of the flame of the combustor 34. Further, there is a possibility that if the distance between the fuel collecting portion 9 and the reformer 4 is short, the flow velocity of the air flowing through the air flow-through portion 3 increases, and the air puts out the flame of the combustor 34. However, in the present embodiment, these possibilities can be reduced by using the covering body 8.

### Specific Example of Covering Body

Hereinafter, a specific example of the covering body 8 will be explained in reference to the drawings.

In the present example, a distance L (see Fig. 1) between the reformer 4 and the fuel jetting opening 13 of the fuel collecting portion 9 is set to about 30 mm or more. With this, a stainless steel container of the reformer 4 and the reforming catalyst are appropriately protected from the heat of the flame of the combustor 34, and the generation of thermal stress at the reformer 4 can also be suppressed.

The covering body 8 is inclined vertically downward in a direction from the reformer 4 toward the fuel collecting portion 9. In the present example, the covering body 8 is inclined at about 30° to the horizontal direction. With this, a gap between the upper wall portion 9B of the fuel collecting portion 9 and the covering body 8 can be appropriately secured, so that the supply of the air toward the fuel jetting openings 13 of the fuel collecting portion 9 is facilitated.

The flame of the combustor 34 is formed in an outward and obliquely upward direction from the fuel jetting openings 13. Therefore, when the covering body 8 is inclined at about 30° to the horizontal direction, the covering body 8 is located so as to enclose the flame of the combustor 34. Therefore, an effect of holding the flame of the combustor 34 by the covering body 8 can be obtained, and this can reduce a possibility that the misfire of the combustor 34 occurs.

It should be noted that an effect of supplying the air toward the fuel jetting openings 13 by the covering body 8 is supported also by a result of a fluid simulation using general-purpose thermo-fluid analysis software "SCRYU/Tetra (trademark)."

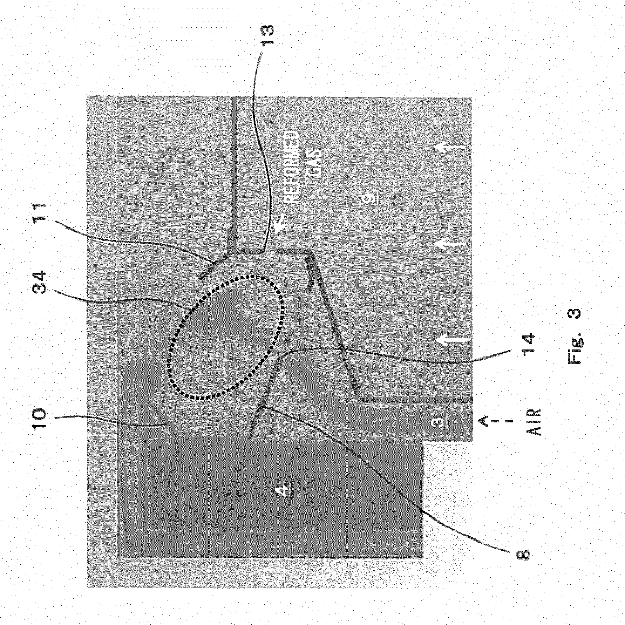

Fig. 3 is a diagram showing one example of the result of the fluid simulation at the peripheral portion of the fuel collecting portion of the fuel cell system according to the embodiment. Fig. 3 is a contour diagram showing a flow velocity distribution of gas in the vicinity of the fuel jetting opening 13 and the air jetting opening 14. The result of the fluid simulation can visualize that the supply of the air to the combustor 34 is facilitated by inclining the covering body 8 at about 30° to the horizontal direction.

As shown in Figs. 2 and 3, the upper wall portion 9B of the fuel collecting portion 9 is inclined vertically downward in a direction from the fuel collecting portion 9 toward the reformer 4. With this, even when the covering body is formed horizontally, the supply of the air to the combustor 34 can be easily performed. It should be noted that as in the present example, inclining both the covering body 8 and the upper wall portion 9B is more advantageous for facilitating the supply of the air to the combustor 34.

### First Flame Holding Cover

Hereinafter, a first flame holding cover 10 will be explained in reference to the drawings.

As shown in Figs. 1 and 2, the first flame holding cover 10 covers the combustor 34 from above the covering body 8. Further, the first flame holding cover 10 is inclined vertically upward in a direction from the reformer 4 toward the fuel collecting portion 9.

The first flame holding cover 10 is constituted by, for example, a metal plate having an annular shape and made of stainless steel. The metal plate is held by the covering body 8 and extends (projects) from the reformer 4 in an inward and obliquely upward direction by a predetermined width so as to enclose the combustor 34.

Thus, the first flame holding cover 10 is arranged so as to enclose the flame of the combustor 34. With this, the effect of holding the flame of the combustor 34 by the first flame holding cover 10 can be obtained, and this can reduce a possibility that the misfire of the combustor 34 occurs. To be specific, even when the fuel utilization ratio of the solid-oxide fuel cell 2 is increased, and this decreases the amount of heat generated by the combustor 34, the flame of the combustor 34 is held by the first flame holding cover 10, and this can suppress the occurrence of, for example, the misfire of the combustor 34.

Further, even when the flame of the combustor 34 is extended by an influence of some sort of state change (a deterioration of air diffusion, an extreme change of a gas flow rate, etc.) of the combustor 34, the first flame holding cover 10 can protect the reformer 4 by preventing the flame from reaching the reformer 4.

### Second Flame Holding Cover

Hereinafter, a second flame holding cover 11 will be explained in reference to the drawings.

As shown in Figs. 1 and 2, the second flame holding cover 11 covers the combustor 34 from above the covering body 8 and projects from the fuel collecting portion 9.

The second flame holding cover 11 is constituted by, for example, a metal plate having an annular shape and made of stainless steel. An inner end portion of the metal plate is fixed to an outer end portion of the lid portion 9C by a suitable fixing method such as welding. The metal plate extends (projects) from the upper end portion of the side wall portion 9A, on which the fuel jetting openings 13 are formed, in an outward and obliquely upward direction by a predetermined width so as to enclose the combustor 34.

Thus, the second flame holding cover 11 is arranged so as to enclose the flame of the combustor 34. With this, the effect of holding the flame of the combustor 34 by the second flame holding cover 11 can be obtained, and this can reduce a possibility that the misfire of the combustor 34 occurs. To be specific, even when the fuel utilization ratio of the solid-oxide fuel cell 2 is increased, and this decreases the amount of heat generated by the combustor 34, the flame of the combustor 34 is held by the second flame holding cover 11, and this can suppress the occurrence of, for example, the misfire of the combustor 34.

### Modified Example

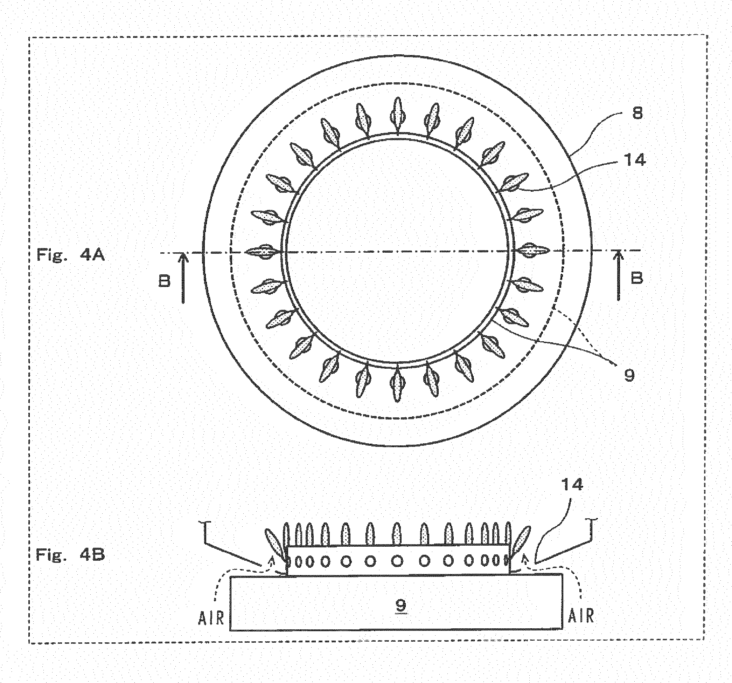

Hereinafter, the fuel cell system 100 according to a modified example of the embodiment will be explained in reference to the drawings. Figs. 4A and 4B are diagrams showing one example of the peripheral portion of the fuel collecting portion of the fuel cell system according to the modified example of the embodiment. Fig. 4A shows the peripheral portion of the fuel collecting portion 9 in a plan view in the vertical direction. Fig. 4B is an arrow view taken along line B-B of Fig. 4A.

In the present modified example, among the air jetting openings 14 of the plurality of stages formed at the covering body 8, the air jetting openings 14 located closest to the fuel collecting portion 9 are provided right under the fuel jetting openings 13. It should be noted that for ease of understanding, in Fig. 4, states of the flame formed at the fuel jetting openings 13 when the combustor 34 is ignited are shown by dot patterns, and regarding the air jetting openings 14, only the round holes located closest to the fuel collecting portion 9 are shown.

When the combustor 34 satisfies a combustion condition in a case where the combustor 34 is ignited at the time of start-up of the fuel cell system 100 or a case where the flame of the combustor 34 is extinguished due to some sort of state change during the operation of the fuel cell system 100, the combustor 34 is ignited by an ignitor (not shown). Examples of the ignitor include a heater and a spark plug.

If each air jetting opening 14 is provided between the adjacent fuel jetting openings 13, the air from the air jetting opening 14 flows upward through between the flame and flame of the adjacent fuel jetting openings 13 so as to interrupt the flame. Therefore, flame transfer between the adjacent fuel jetting openings 13 becomes difficult, and there is a possibility that partial misfire of the combustor 34, ignition failure, or the like occurs. However, according to the present modified example, since the air jetting openings 14 are provided right under the fuel jetting openings 13 as described above, such possibility can be reduced. To be specific, since the air hardly flows through between the flame and flame of the adjacent fuel jetting openings 13, the flame is easily transferred from an ignition point of the combustor 34 to the entire circumference.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention, which is defined by the appended claims.

### Industrial Applicability

According to one aspect of the present disclosure, when increasing the fuel utilization ratio for improving the electric power generation efficiency of the solid-oxide fuel cell, the mixing at the combustor between the air and the reformed gas discharged from the solid-oxide fuel cell can be performed more appropriately than conventional cases. Therefore, the aspect of the present disclosure can be used for, for example, fuel cell systems.

## Claims

1. A fuel cell system comprising:
a reformer (4) configured to reform raw fuel to generate reformed gas;
a solid-oxide fuel cell (2) configured to generate electric power by a reaction between the reformed gas and air;
a fuel collecting portion (9) provided adjacent to the solid-oxide fuel cell (2), the reformed gas remaining after the reaction of the solid-oxide fuel cell (2) being collected at the fuel collecting portion (9);
an airflow-through portion (3) formed along an outer periphery of the fuel collecting portion (9);
a combustor (34) configured to mix the reformed gas discharged from a fuel jetting opening (13) of the fuel collecting portion (9) with the air flowing through the air flow-through portion (3), to combust the reformed gas; and
a covering body (8) provided so as to block flow of the air in a direction from the air flow-through portion (3) toward the combustor (34) along the reformer (4), wherein:
the reformer (4) reforms the raw fuel using combustion heat of the combustor (34); and
the covering body (8) supplies the air toward the fuel jetting opening (13) of the fuel collecting portion (9).

2. The fuel cell system according to claim 1, wherein the air used for combustion of the combustor (34) is cathode off gas discharged from the solid-oxide fuel cell (2).

3. The fuel cell system according to claim 1 or 2, wherein the covering body (8) is inclined vertically downward in a direction from the reformer (4) toward the fuel collecting portion (9).

4. The fuel cell system according to any one of claims 1 to 3, further comprising a first flame holding cover (10) covering the combustor (34) from above the covering body (8).

5. The fuel cell system according to claim 4, wherein the first flame holding cover (10) is inclined vertically upward in a direction from the reformer (4) toward the fuel collecting portion (9).

6. The fuel cell system according to any one of claims 1 to 5, further comprising a second flame holding cover (11) covering the combustor (34) from above the covering body (8) and projecting from the fuel collecting portion (9).

7. The fuel cell system according to any one of claims 1 to 6, wherein:
the covering body (8) includes an opening portion through which the air is jetted from the air flow-through portion (3) toward the combustor (34); and
the opening portion is provided right under the fuel jetting opening (13).

## Patentansprüche

1. Brennstoffzellen-System, das umfasst:
einen Reformer (4), der so eingerichtet ist, dass er Roh-Brennstoff reformiert, um reformiertes Gas zu erzeugen,
eine Festoxid-Brennstoffzelle (2), die so eingerichtet ist, dass sie mittels einer Reaktion zwischen dem reformierten Gas und Luft elektrische Energie erzeugt;
einen Brennstoff-Sammelabschnitt (9), der an die Festoxid-Brennstoffzelle (2) angrenzt, wobei das reformierte Gas, das nach der Reaktion der Festoxid-Brennstoffzelle (2) verbleibt, in dem Brennstoff-Sammelabschnitt (9) gesammelt wird;
einen Luft-Durchgangsabschnitt (3), der an einem Außenumfang des Brennstoff-Sammelabschnitts (9) ausgebildet ist;
einen Brenner (34), der so eingerichtet ist, dass er das reformierte Gas, das über eine Brennstoff-Ausstoßöffnung (13) des Brennstoff-Sammelabschnitts (9) abgegeben wird, mit der Luft mischt, die durch den Luft-Durchgangsabschnitt (3) strömt, und das reformierte Gas verbrennt; sowie
einen abdeckenden Körper (8), der vorhanden ist, um Strom der Luft in einer Richtung von dem Luft-Durchgangsabschnitt (3) in Richtung des Brenners (34) an dem Reformer (4) entlang zu blockieren, wobei:
der Reformer (4) den Roh-Brennstoff unter Verwendung von Verbrennungswärme des Brenners (34) reformiert; und
der abdeckende Körper (8) die Luft in Richtung der Brennstoff-Ausstoßöffnung (13) des Brennstoff-Sammelabschnitts (9) zuführt.

2. Brennstoffzellen-System nach Anspruch 1, wobei die zur Verbrennung des Brenners (34) genutzte Luft Kathoden-Abgas ist, das von der Festoxid-Brennstoffzelle (2) abgegeben wird.

3. Brennstoffzellen-System nach Anspruch 1 oder 2, wobei der abdeckende Körper (8) in einer Richtung von dem Reformer (4) auf den Brennstoff-Sammelabschnitt (9) zu vertikal nach unten geneigt ist.

4. Brennstoffzellen-System nach einem der Ansprüche 1 bis 3, das des Weiteren eine erste Flammenhalte-Abdeckung (10) umfasst, die den Brenner (34) von oberhalb des abdeckenden Körpers (8) abdeckt.

5. Brennstoffzellen-System nach Anspruch 4, wobei die erste Flammenhalte-Abdeckung (10) in einer Richtung von dem Reformer (4) auf den Brennstoff-Sammelabschnitt (9) zu vertikal nach oben geneigt ist.

6. Brennstoffzellen-System nach einem der Ansprüche 1 bis 5, das des Weiteren eine zweite Flammenhalte-Abdeckung (11) umfasst, die den Brenner (34) von oberhalb des abdeckenden Körpers (8) abdeckt und von dem Brennstoff-Sammelabschnitt (9) vorsteht.

7. Brennstoffzellen-System nach einem der Ansprüche 1 bis 6, wobei:
der abdeckende Körper (8) einen Öffnungsabschnitt enthält, über den die Luft von dem Luft-Durchgangsabschnitt (3) in Richtung des Brenners (34) ausgestoßen wird; und
der Öffnungsabschnitt sich direkt unter der Brennstoff-Ausstoßöffnung (13) befindet.

## Revendications

1. Système de pile à combustible comprenant :
un reformeur (4) configuré pour reformer un combustible brut pour générer un gaz reformé ;
une pile à combustible à oxyde solide (2) configurée pour générer une puissance électrique par une réaction entre le gaz reformé et de l'air ;
une partie de collecte de combustible (9) disposée adjacente à la pile à combustible à oxyde solide (2), le gaz reformé restant après la réaction de la pile à combustible à oxyde solide (2) étant collecté au niveau de la partie de collecte de combustible (9) ;
une partie d'écoulement traversant d'air (3) constituée le long d'une périphérie extérieure de la partie de collecte de combustible (9) ;
une chambre de combustion (34) configurée pour mélanger le gaz reformé déchargé depuis une ouverture de projection de combustible (13) de la partie de collecte de combustible (9) avec l'air s'écoulant à travers la partie d'écoulement traversant d'air (3), pour induire la combustion du gaz reformé ; et
un corps couvrant (8) fourni de sorte bloquer un écoulement de l'air dans une direction de la partie d'écoulement traversant d'air (3) vers la chambre de combustion (34) le long du reformeur (4), dans lequel :
le reformeur (4) reforme le combustible brut en utilisant une chaleur de combustion de la chambre de combustion (34) ; et
le corps couvrant (8) dirige l'air vers l'ouverture de projection de combustible (13) de la partie de collecte de combustible (9).

2. Le système de pile à combustible selon la revendication 1, dans lequel l'air utilisé pour la combustion de la chambre de combustion (34) est un gaz effluent cathodique déchargé depuis la pile à combustible à oxyde solide (2).

3. Le système de pile à combustible selon la revendication 1 ou 2, dans lequel le corps couvrant (8) est incliné verticalement vers le bas dans une direction du reformeur (4) vers la partie de collecte de combustible (9).

4. Le système de pile à combustible selon l'une quelconque des revendications 1 à 3, comprenant en outre un premier capot de maintien de flamme (10) couvrant la chambre de combustion (34) depuis le dessus du corps couvrant (8).

5. Le système de pile à combustible selon la revendication 4, dans lequel le premier capot de maintien de flamme (10) est incliné verticalement vers le haut dans une direction du reformeur (4) vers la partie de collecte de combustible (9) .

6. Le système de pile à combustible selon l'une quelconque des revendications 1 à 5, comprenant en outre un deuxième capot de maintien de flamme (11) couvrant la chambre de combustion (34) depuis le dessus du corps couvrant (8) et se projetant depuis la partie de collecte de combustible (9) .

7. Le système de pile à combustible selon l'une quelconque des revendications 1 à 6, dans lequel :
le corps couvrant (8) inclut une partie d'ouverture à travers laquelle l'air est projeté de la partie d'écoulement traversant d'air (3) vers la chambre de combustion (34) ; et
la partie d'ouverture est disposée immédiatement sous l'ouverture de projection de combustible (13).
